# EUROPÄISCHE PATENTSCHRIFT

(11) **EP 2 467 322 B1**
(45) Veröffentlichungstag und Bekanntmachung des Hinweises auf die Patenterteilung: **18.12.2013**
(21) Anmeldenummer: 10754654.1
(22) Anmeldetag: 17.08.2010
(51) Int. Cl.: B65G 53/66

(54) **VERFAHREN UND EINRICHTUNG ZUR AUTOMATISCHEN BELADUNG EINER FÖRDERLEITUNG MIT SCHÜTTGUT**
METHOD AND DEVICE FOR AUTOMATICALLY LOADING A FEED LINE WITH BULK MATERIAL
PROCÉDÉ DE CHARGEMENT AUTOMATIQUE D'UNE CONDUITE DE TRANSPORT DE MATIÈRE EN VRAC ET APPAREIL CORRESPONDANT

(30) Priorität: 20.08.2009 AT 13112009
(43) Veröffentlichungstag der Anmeldung: 27.06.2012
(73) Patentinhaber: WITTMANN KUNSTSTOFFGERÄTE GMBH, 1220 Wien (AT)
(72) Erfinder: VIERLING, Andreas, 65468 Trebur (DE)
(74) Vertreter: Krause, Peter
(86) Internationale Anmeldenummer: PCT/AT2010/000301
(87) Internationale Veröffentlichungsnummer: WO 2011/020132

(56) Entgegenhaltungen:
- WO-A1-02/36469
- WO-A1-99/37565
- WO-A2-2004/035278
- FR-A1- 2 235 862
- GB-A- 999 635
- US-A- 4 059 310
- US-A- 5 490 745

## Beschreibung

Die Erfindung betrifft ein Verfahren zur automatischen Beladung einer Förderleitung mit Schüttgut, insbesondere einem Kunststoff-Granulat, in einer Saugförderanlage mit mindestens einem, zu einem Vorratsbehälter im Abstand vorgesehenen, Materialabscheider. Ferner betrifft die Erfindung auch eine Einrichtung zur Durchführung des Verfahrens.

Pneumatische Förderanlagen werden in der Regel derart betrieben, dass an der Materialaufgabestelle die Mischung Material zu Luft fix eingestellt wird. In den einschlägigen Fachkreisen ist dies die Beladung der Förderleitung. An sich sind verschiedene Ausführungen von Materialaufgabestellen bekannt, wobei bei allen das Problem auftritt, dass eine optimale Mischung bei variierenden Förderlängen durch die fixe Einstellung nicht erreicht wird.

Pneumatische Förderanlagen für Schüttgut sind derart geplant und aufgebaut, dass eine Flexibilität für die Materialverteilung erzielt wird. Aus einer Materialquelle, beispielsweise dem Vorratsbehälter, werden nacheinander verschiedene Förderziele bedient. Auf Grund der fix eingestellten Werte an der Materialaufgabestelle ergibt sich für die Förderung entsprechend der Gebläsekennlinie und der Länge bis zum Materialabscheider eine Beladung. Diese wird aus praktischen Gründen derart gewählt, dass für die gängigen Materialsorten und dem längsten Förderweg die Förderung gewährleistet ist. Werden jedoch kürzere Förderwege bedient, so ist die Beladung geringer. Eine geringere Beladung erhöht durch höhere Schüttgeschwindigkeiten den Verschleiß der Förderleitungen und der Empfangsgeräte, beispielsweise die Materialabscheider, am Förderziel.

Mit einer Verringerung der Beladung wird gleichzeitig der Schüttgutstrom geringer, obwohl das Schüttgut schneller durch die Rohrleitung transportiert wird. Auch ein Verschleiß vom Material selbst ist gegeben, der Ablagerungen in der Förderleitung bildet oder als Staub wirksam wird.

So ist aus der DE 100 39 564 A1 eine Vorrichtung zum Fördern von Schüttgut bekannt, bei der mittels einer Saugfördereinrichtung dem zu fördernden Schüttgut ein Fördergas in veränderlicher Menge beiladbar ist. Es hat sich jedoch bei praktischen Versuchen gezeigt, dass die Steuerung des Fördergases allein keine Vermeidung der oben aufgezeigten Nachteile bringt.

Aus US 5,490,745 A1 ist ein Verfahren zur Beladung einer Förderleitung gemäß dem Oberbegriff des Anspruchs 1 bekannt. Ein Verschluss erlaubt die Beladung der Förderleitung nur, wenn die Luftgeschwindigkeit hoch genug ist.

Aufgabe der Erfindung ist es, ein Verfahren der eingangs zitierten Art zu schaffen, dass einerseits die oben angerissenen Nachteile vermeidet und anderseits ein wirtschaftliches Betreiben einer Saugförderanlage gewährleistet.

Die Aufgabe wird durch das Verfahren des Anspruchs 1 gelöst.

Mit der Erfindung ist es erstmals möglich, eine dem Förderweg entsprechend angepasste Beladung zu gewährleisten, wodurch die Gesamtförderleistung der Anlage deutlich erhöht wird. Ferner wird in vorteilhafterweise durch die optimale Beladung der Verschleiß an Rohrleitungen, Geräten und beim Schüttgut drastisch reduziert.

Das erfindungsgemäße Verfahren zur automatischen Beladung sorgt dafür, dass für unterschiedliche Förderwege bzw. -längen und verschiedene Materialsorten die optimale Beladung gegeben ist.

Aus der einschlägigen Fachliteratur in Zusammenhang mit praktischen Testerfahrungen können sowohl die Förderleitungs-Parameter wie auch die Materialparameter ermittelt werden. Aus diesen beiden Parametern - auf die später noch näher eingegangen wird - kann ein Sollwert für die Luftgeschwindigkeit errechnet werden. Natürlich ist dieser Sollwert in einer Datenbank speicherbar und kann automatisch für die Regelung Verwendung finden.

Nach der Erfindung werden ein Minimum-Sollwert und ein Maximum-Sollwert empirisch ermittelt. Dadurch kann die Förderanlage mit einer Bandbreite im praktischen Betrieb betrieben werden. Der Minimum-Sollwert ist vorzugsweise der untere und der Maximum-Sollwert der obere Grenzwert.

Innerhalb einer derartigen Bandbreite werden die bereits erwähnten Vorteile erreicht.

Die Luftgeschwindigkeit wird im Bereich der Beladung gemessen. Natürlich könnten auch Messwerte erfasst werden, aus denen die Luftgeschwindigkeit errechnet werden kann. So ist es durchaus denkbar, dass der Druckabfall an einem Hindernis in der Förderleitung erfasst wird und zur Ermittlung der Luftgeschwindigkeit heran gezogen wird. Dieses Hindernis könnte beispielsweise auch der Rohrstutzen selbst sein. Ebenso könnte beispielsweise die Bestimmung der Luftmenge in Zusammenhang mit dem Rohrquerschnitt zur Ermittlung der Luftgeschwindigkeit dienen. Für die Regelung selbst ist vor allem nur ein Wert, nämlich der untere Grenzwert, relevant.

In einem Regler werden dann der Minimum-Sollwert, der Maximum-Sollwert und der Messwert, als Istwert, der Luftgeschwindigkeit verglichen. Erreicht der Istwert das Sollintervall wird Schüttgut zudosiert. Im Zuge des Betriebes der Förderanlage wird die Luftgeschwindigkeit in regelmäßigen Abständen gemessen und die Dosierung des Schüttgutes entsprechend eingestellt.

Gemäß einem weiteren besonderen Merkmal der Erfindung wird die Luftgeschwindigkeit über die Saugleistung auf das Sollintervall geregelt. Mit einer derartigen, der vorstehend aufgezeigten Regelung, überlagerten Regelung sind hypersensible Einstellungen im Betrieb möglich.

Nach einer besonderen Ausgestaltung der Erfindung wird die Luftgeschwindigkeit vor der Beladungsstelle in der Förderleitung gemessen. Auf Grund von Versuchen und physikalischen Grundüberlegungen ist die Luftgeschwindigkeit an der Materialaufgabestelle bzw. der Beladungsstelle für die pneumatische Saugförderung für deren Optimierung entscheidend. Die Durchführung der Messung vor der Beladungsstelle bringt den Vorteil mit sich, dass die zu messende Luft keine Material- und Staubbelastung aufweist.

Gemäß einer Weiterbildung der Erfindung werden die Schaltspiele der Material-Zudosierung über ein elektronisches Verzögerungsglied oder eine Drossel gedämpft. Wie bereits erwähnt, wird bei Erreichen des Sollintervalles der Luftgeschwindigkeit Material bzw. Schüttgut in die Förderleitung hinein dosiert. Im Moment der Zudosierung fällt jedoch die Luftgeschwindigkeit an der Messstelle ab und die Materialzugabe könnte gestoppt werden. Um nun die Regelung der Beladung zu beruhigen, hat sich eine Dämpfung der Schaltspiele als sehr vorteilhaft erwiesen.

Nach einem Merkmal der Erfindung werden die Förderleitungs-Parameter aus der Luftdichte und dem Querschnitt der Förderleitung und/oder der Rauhigkeit der Rohrinnenfläche ermittelt. Wie bereits angesprochen, sind diese Maße für die Ermittlung der Sollwerte der Luftgeschwindigkeit von Bedeutung.

Gemäß einem weiteren Merkmal der Erfindung werden die Material-Parameter aus dem spezifischen Gewicht und/oder der Korndichte und/oder dem Korndurchmesser und/oder Kornform des Schüttgutes ermittelt. Ebenso spielen diese Faktoren für die Ermittlung der Sollwerte für die Luftgeschwindigkeit eine große Rolle.

Es ist auch Aufgabe der Erfindung eine Einrichtung zur Durchführung des oben aufgezeigten Verfahrens zu schaffen, die sowohl einen einfachen Aufbau aufweist und mit der ein wirtschaftlicher Betrieb ermöglicht wird.

Diese Aufgabe wird durch die Einrichtung des Anspruchs 7 gelöst.

Mit dieser erfindungsgemäßen Einrichtung ist es erstmals möglich eine automatische, insbesondere optimale, Beladung für unterschiedliche Förderwege bzw. -längen und verschiedene Materialsorten in Förderanlagen für Schüttgut zu erreichen. Die einfache Konzeption in Zusammenhang mit gängigen Maschinenteilen gewährleistet eine wirtschaftliche Ausstattung der Förderanlage. Vor allem weisen die verwendeten Maschinenelemente eine Wartungsarmut auf, die die Wirtschaftlichkeit der Anlage im Betrieb keinesfalls schmälern. Ein weiterer Vorteil dieser erfindungsgemäßen Einrichtung ist darin zu sehen, dass ein etwaiges Nachrüsten einer bestehenden Förderanlage jederzeit möglich ist. Auch die Montage dieser erfindungsgemäßen Einrichtung ist problemlos, ohne überproportionalen Aufwand gegeben.

Nach einer besonderen Ausgestaltung der Erfindung ist die Drosselblende vor der Dosiereinrichtung angeordnet. Wie bereits erwähnt, ist durch diese Anordnung eine Messung des Luftstromes ohne Belastung von Material oder Staub möglich.

Gemäß einer Weiterbildung der Erfindung ist zur Dämpfung der Schalthäufigkeit der Dosiereinrichtung ein Drosselrückschlagventil in Serie zum Druckschalter geschaltet. Um die Regelung des Dosiervorganges temporär zu stabilisieren, hat sich eine Dämpfung der Schaltspiele als sehr vorteilhaft erwiesen. Auch diese Maschinenelemente sind wartungsarm und garantieren einen langen Einsatzzyklus.

Nach einer besonderen Ausgestaltung der Erfindung besteht die Dosiereinrichtung aus einem Dosierverschluss, der über einen Pneumatikzylinder betätigbar ist. Auch diese Maschinenelemente sind robust im Aufbau, so dass Totzeiten durch Servicearbeiten nicht gesondert anfallen.

Gemäß einer weiteren Ausgestaltung der Erfindung erfolgt die Ansteuerung des Pneumatikzylinders über ein Magnetventil und einer Pressluftquelle. Die oben erwähnten Vorteile zu den erfindungsgemäßen Maschinenteilen treffen auch hier zu.

Nach einer weiteren besonderen Ausgestaltung der Erfindung ist das Ansteuersignal für die Ansteuerung aus einer Spannungsquelle und dem Druckschalter generierbar. Durch die Einfachheit im Aufbau und in der Funktionalität liegen die Vorteile der Betriebssicherheit auf der Hand.

Gemäß einer Ausgestaltung der Erfindung ist zur Messung der Saugleistung vor der Pumpe ein Vakuumsensor vorgesehen. Derartige Sensoren sind den heutigen Anforderungen entsprechend gefertigt und sind in den Anschaffungsinvestitionen wirtschaftlich kaum überbietbar.

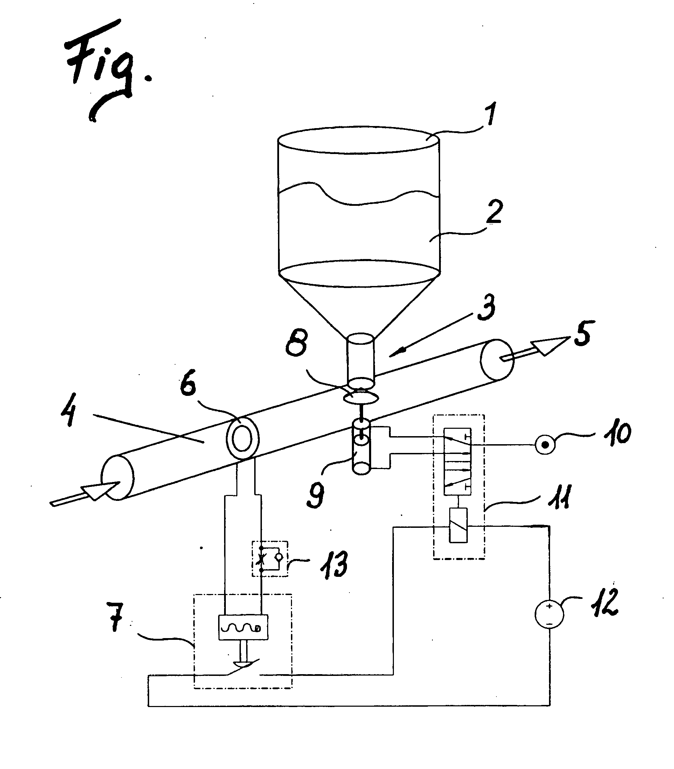

Die Erfindung wird an Hand eines in der Zeichnung dargestellten Ausführungsbeispieles näher erläutert.

Die Fig. zeigt in schematischer Darstellung eine Einrichtung zur automatischen Beladung einer Förderanlage für Schüttgut.

Gemäß der Fig. umfasst eine Förderanlage einen Vorratsbehälter 1 für Schüttgut 2, wobei im dargelegten Fall eine Saugförderanlage für Kunststoff-Granulat aufgezeigt wird. Der Vorratsbehälter 1 kann natürlich auch als Lager- oder Trockenbehälter ausgeführt sein. Der Vorratsbehälter 1 mündet an seinem unteren Ende über eine Beladungseinrichtung 3 in einer Förderleitung 4. Die Förderleitung 4 ist mit einem Ende - angedeutet mit dem Pfeil 5 - mit mindestens einem, in einer industriellen Förderanlage mit mehreren - nicht dargestellten - Materialabscheidern verbunden. Nach dem Materialabscheider ist die Förderleitung 4 an einer - ebenfalls nicht dargestellten - Saugpumpe angeschlossen. Die Saugleistung der Saugpumpe beeinflusst natürlich die Luftgeschwindigkeit in der Förderleitung 4, neben förderleitungs- und materialspezifischen Parametern, wie später noch näher beschrieben wird.

Um nun mit einer derartigen Saugförderanlage für Schüttgut 2 eine optimale Beladung zu den verschieden weit angeordneten Materialabscheidern zu erreichen, werden für den Bereich der Beladungsstelle ein Minimum-Sollwert und ein Maximum-Sollwert für die Luftgeschwindigkeit aus, auf die Förderleitung bezogene, Förderleitungs-Parameter sowie aus, auf das Schüttgut bezogene, Materialparameter empirisch ermittelt und dieser Wert gegebenenfalls in einer Datenbank gespeichert. Weiters wird im Bereich der Beladungsstelle in der Förderleitung 4 die Luftgeschwindigkeit gemessen. Zur Messung der Luftgeschwindigkeit dient eine Drosselblende 6. Vorzugsweise ist diese Drosselblende 6 vor der Beladungseinrichtung 3 vorgesehen. Wie ja an sich bekannt, erzeugt der angesaugte Luftstrom an der Drosselblende 6 einen Druckverlust, der gemessen wird.

Natürlich könnten auch andere Größen die zur Bestimmung der Luftgeschwindigkeit dienen, gemessen werden. So könnte der Druckabfall an einem Hindernis in der Förderleitung 4 erfasst werden und zur Ermittlung der Luftgeschwindigkeit heran gezogen werden. Dieses Hindernis könnte beispielsweise auch der Rohrstutzen selbst sein. Ebenso könnte beispielsweise die Bestimmung der Luftmenge in Zusammenhang mit dem Rohrquerschnitt zur Ermittlung der Luftgeschwindigkeit dienen.

Die Förderleitungs-Parameter werden aus der Luftdichte und dem Querschnitt der Förderleitung 4 und/oder der Rauhigkeit der Rohrinnenfläche ermittelt. Die Material-Parameter werden aus dem spezifischen Gewicht und/oder der Korndichte und/oder dem Korndurchmesser und/oder Kornform des Kunststoff-Granulates ermittelt.

Der Minimum-Sollwert, der Maximum-Sollwert und der Messwert der Luftgeschwindigkeit werden einem Regler zugeführt. Bei Erreichen des Sollintervalles wird Schüttgut 2 zudosiert, wobei die Zudosierung des Schüttgutes 2 entsprechend dem gemessenen Wert der Luftgeschwindigkeit beispielsweise kontinuierlich oder taktweise erfolgt.

Im Bereich der Beladungseinrichtung 3 ist die Drosselblende 6 mit einem Druckschalter 7 zur Messung der Luftgeschwindigkeit vorgesehen. Die Beladungseinrichtung 3 ist als Dosiereinrichtung ausgebildet. Der Druckschalter 7 misst den oben angesprochenen Druckverlust und ist in der Praxis der - oben angesprochene - Regler, wobei die Sollwerte für die Luftgeschwindigkeit an diesem Druckschalter 7 eingegeben wird.

Wird das Sollintervall der Luftgeschwindigkeit erreicht, schließt der Druckschalter 7 und Schüttgut 2 wird zudosiert. Die Zudosierung von Schüttgut 2 erfolgt entsprechend dem gemessenen Wert der Luftgeschwindigkeit beispielsweise kontinuierlich oder taktweise.

Es wird also die Beladung der Förderleitung 4 über die Materialdosierung in Abhängigkeit von der Luftgeschwindigkeit an der Beladungsstelle unabhängig von der Länge der Förderleitung 4 geregelt. Durch Einstellung des Schaltpunktes am Druckschalter 7 und einem noch später detaillierter beschriebenen Drosselrückschlagventil 13 ist die Beladung für die Förderung einstellbar.

Die Dosiereinrichtung besteht aus einem Dosierverschluss 8, der über einen Pneumatikzylinder 9 betätigbar ist. Die Ansteuerung des Pneumatikzylinders 9 erfolgt über ein Magnetventil 11 und einer Pressluftquelle 10. Das Ansteuersignal für die Ansteuerung ist aus einer Spannungsquelle 12 und dem Druckschalter 7 generierbar.

Zur Dämpfung der Schalthäufigkeit der Dosiereinrichtung bzw. um die Regelung des Dosiervorganges temporär zu stabilisieren, ist ein Drosselrückschlagventil 13 in Serie zum Druckschalter 7 geschaltet. Natürlich könnten die Schaltspiele der Material-Zudosierung auch in einer alternativen Lösung über ein elektronisches Verzögerungsglied oder eine Drossel gedämpft werden.

Über die Regelung der Dosierung hinaus ist es sicher vorteilhaft, wenn auch die Luftgeschwindigkeit über die Saugleistung auf ein Sollintervall geregelt wird. Zur Messung der Saugleistung ist vor der Pumpe ein Vakuumsensor vorgesehen.

## Patentansprüche

1. Verfahren zur Beladung einer Förderleitung (4) mit Schüttgut, insbesondere einem Kunststoff-Granulat, in einer Saugförderanlage mit mindestens einem, zu einem Vorratsbehälter (1) im Abstand vorgesehenen. Materialabscheider, wobei für den Bereich der Beladungsstelle ein Sollwert für die Luftgeschwindigkeit gewählt wird, **dadurch gekennzeichnet, dass** zur automatischen Beladung
- für den Bereich der Beladungsstelle ein Minimum-Sollwert und ein Maximum-Sollwert für die Luftgeschwindigkeit aus, auf die Förderleitung (4) bezogene, Förderleitungs-Parameter sowie aus, auf das Schüttgut (2) bezogene, Materialparameter empirisch ermittelt werden und diese Werte gegebenenfalls in einer Datenbank gespeichert werden,
- dass im Bereich der Beladungsstelle in der Förderleitung (4) die Luftgeschwindigkeit, oder eine Größe die zur Bestimmung der Luftgeschwindigkeit dient, gemessen wird,
- dass der Minimum-Sollwert, der Maximum-Sollwert und der Messwert der Luftgeschwindigkeit einem Regler zugeführt werden und
- dass bei Erreichen des Sollintervalles Schüttgut (2) zudosiert wird, wobei die Zudosierung von Schüttgut (2) entsprechend dem gemessenen Wert der Luftgeschwindigkeit beispielsweise kontinuierlich oder taktweise erfolgt.

2. Verfahren nach Anspruch 1, **dadurch gekennzeichnet, dass** die Luftgeschwindigkeit über die Saugleistung auf das Sollintervall geregelt wird.

3. Verfahren nach Anspruch 1 oder 2, **dadurch gekennzeichnet, dass** die Luftgeschwindigkeit vor der Beladungsstelle in der Förderleitung (4) gemessen wird.

4. Verfahren nach mindestens einem der Ansprüche 1 bis 3, **dadurch gekennzeichnet, dass** die Schaltspiele der Material-Zudosierung über ein elektronisches Verzögerungsglied oder eine Drossel gedämpft werden.

5. Verfahren nach mindestens einem der Ansprüche 1 bis 4, **dadurch gekennzeichnet, dass** die Förderleitungs-Parameter aus der Luftdichte und dem Querschnitt der Förderleitung (4) und/oder der Rauhigkeit der Rohrinnenfläche ermittelt werden.

6. Verfahren nach mindestens einem der Ansprüche 1 bis 5, **dadurch gekennzeichnet, dass** die Material-Parameter aus dem spezifischen Gewicht und/oder der Korndichte und/oder dem Korndurchmesser und/oder Kornform des Schüttgutes (2) ermittelt werden.

7. Einrichtung zur Durchführung des Verfahrens nach einem der Ansprüche 1 bis 6, für eine Förderanlage, die einen Vorratsbehälter (1) für das Schüttgut (2) mit einer Beladungseinrichtung (3) sowie eine Förderleitung (4) zum Materialabscheider umfasst, wobei im Bereich der Beladungseinrichtung (3) eine Drosselblende (6) mit einem Druckschalter (7) zur Messung der Luftgeschwindigkeit vorgesehen ist und die Beladungseinrichtung (3) als Dosiereinrichtung ausgebildet ist, wobei die Dosiereinrichtung aus einem Dosierverschluss (8), der über einen Pneumatikzylinder (9) betätigbar ist, besteht.

8. Einrichtung nach Anspruch 7, **dadurch gekennzeichnet, dass** die Drosselblende (6) vor der Dosiereinrichtung angeordnet ist.

9. Einrichtung nach Anspruch 7 oder 8, **dadurch gekennzeichnet, dass** zur Dämpfung der Schalthäufigkeit der Dosiereinrichtung ein Drosselrückschlagventil (13) in Serie zum Druckschalter (7) geschaltet ist.

10. Einrichtung nach einem der Ansprüche 7 bis 9, **dadurch gekennzeichnet, dass** die Ansteuerung des Pneumatikzylinders (9) über ein Magnetventil (11) und einer Pressluftquelle (10) erfolgt.

11. Einrichtung nach Anspruch 10, **dadurch gekennzeichnet, dass** das Ansteuersignal für die Ansteuerung aus einer Spannungsquelle (12) und dem Druckschalter (7) generierbar ist.

12. Einrichtung nach einem der Ansprüche 7 bis 11, **dadurch gekennzeichnet, dass** zur Messung der Saugleistung vor der Pumpe ein Vakuumsensor vorgesehen ist.

## Claims

1. Method for loading a feed line (4) with bulk material, in particular a plastic granular material, in a suction delivery system having at least one material separator, which is provided at a distance to a reservoir (1), wherein a target value for the air speed is selected for the area of the loading point, **characterised in that** for automatic loading
- a minimum target value and a maximum target value for the air speed are empirically determined for the area of the loading point from feed line parameters related to the feed line (4) and from material parameters related to the bulk material (2) and said values are stored in a database where applicable,
- that in the area of the loading point, the air speed or a quantity serving for determination of the air speed is measured in the feed line (4),
- that the minimum target value, the maximum target value and the measured value of the air speed are fed to a controller, and
- that when the target interval is reached, bulk material (2) is added in a metered manner, wherein the bulk material (2) is added in a metered manner according to the measured value of the air speed, for example continuously or in cycles.

2. Method according to Claim 1, **characterised in that** the air speed is controlled to the target interval via the suction capacity.

3. Method according to Claim 1 or 2, **characterised in that** the air speed is measured ahead of the loading point in the feed line (4).

4. Method according to at least one of Claims 1 to 3, **characterised in that** the switching cycles of the metered addition of material are damped through an electronic time-lag device or a reducing damper.

5. Method according to at least one of Claims 1 to 4, **characterised in that** the feed line parameters are determined from the air density and the cross-section of the feed line (4) and/or the roughness of the inner pipe surface.

6. Method according to at least one of Claims 1 to 5, **characterised in that** the material parameters are determined from the specific gravity and/or the grain closeness and/or the grain diameter and/or the grain form of the bulk material (2).

7. Device for implementation of the method according to one of the Claims 1 to 6 for a delivery system comprising a reservoir (1) for the bulk material (2) with a loading device (3) and a feed line (4) to the material separator, wherein an orifice (6) having a pressure switch (7) for measuring the air speed is provided in the area of the loading device (3), and the loading device (3) is designed as a metering apparatus, wherein the metering apparatus consists of a metering aperture (8) which can be actuated through a pneumatic cylinder (9).

8. Device according to Claim 7, **characterised in that** the orifice (6) is arranged ahead of the metering apparatus.

9. Device according to Claim 7 or 8, **characterised in that** a one-way restrictor (13) is switched in series to the pressure switch (7) to dampen the number of switching actuations of the metering apparatus.

10. Device according to one of Claims 7 to 9, **characterised in that** the pneumatic cylinder (9) is driven through a magnetic valve (11) and a compressed air source (10).

11. Device according to Claim 10, **characterised in that** the drive signal for driving can be generated from a supply point (12) and the pressure switch (7).

12. Device according to one of Claims 7 to 11, **characterised in that** a vacuum sensor is provided ahead of the pump for measuring the suction capacity.

## Revendications

1. Procédé pour le chargement d'une conduite d'alimentation (4) de matériau en vrac, notamment de granulat plastique, dans un système de convoyeur à vide avec au moins un séparateur de matériaux, prévu à distance sous forme de réservoir (1), où dans la zone du point de chargement, une valeur de consigne est déterminée pour la vitesse de l'air, procédé **caractérisé par le fait que** pour un chargement automatique
- dans la zone du point de chargement, une valeur de consigne minimale et une valeur de consigne maximale pour la vitesse de l'air sont déterminés de façon empirique et le cas échéant, stockés dans une base de données, lesquels paramètres se réfèrent à la conduite de transport (4) et au matériau en vrac (2) ;
- que dans la zone du point de chargement dans la conduite d'alimentation (4), la vitesse de l'air ou une variable qui sert à déterminer la vitesse de l'air, est mesurée,
- que la valeur de consigne minimale, la valeur de consigne maximale et la valeur mesurée de la vitesse de l'air sont dirigées vers un régulateur et
- que lorsque l'intervalle de consigne est atteint, le matériau en vrac (2) est dosé et ajouté, le dosage du matériau en vrac (2) correspondant à la valeur mesurée de la vitesse de l'air opérée par exemple en continu ou selon en cadence.

2. Procédé selon la revendication 1, **caractérisé par le fait que** la vitesse de l'air est contrôlée par la puissance d'aspiration selon l'intervalle de consigne.

3. Procédé selon la revendication 1 ou 2, **caractérisé par le fait que** la vitesse de l'air est mesurée en amont du point de charge dans la conduite d'alimentation (4).

4. Procédé selon au moins l'une des revendications 1 à 3, **caractérisé par le fait que** lors du dosage, les jeux de commutation sont atténués par un élément de décélération électronique ou par un étranglement.

5. Procédé selon au moins l'une des revendications 1 à 4, **caractérisé par le fait que** les paramètres de la conduite d'alimentation sont déterminés à partir de la densité de l'air et de la section de la conduite d'alimentation (4) et/ou de la rugosité de la surface interne du tube.

6. Procédé selon au moins l'une des revendications 1à 5, **caractérisé par le fait que** les paramètres du matériau sont déterminés à partir du poids spécifique et/ou la densité du grain et/ou le diamètre et/ou la forme des grains du matériau en vrac (2).

7. Dispositif de mise en oeuvre du procédé selon l'une des revendications 1 à 6, pour un système de convoyeur comprenant un réservoir (1) pour le matériau en vrac (2) avec un dispositif de chargement (3) et une ligne d'alimentation (4) pour séparer les matériaux, un diaphragme de mesure (6) avec un interrupteur à pression (7) étant prévu pour mesurer la vitesse de l'air dans la zone du dispositif de chargement (3) et le dispositif de chargement étant conçu comme un dispositif de dosage , lequel est composé d'un capuchon de dosage (8) qui peut être actionné par un vérin pneumatique (9).

8. Dispositif pour la mise en oeuvre selon la revendication 7, **caractérisé par le fait que** le diaphragme de mesure (6) est disposé en amont du dispositif de dosage.

9. Dispositif selon la revendication 7 ou 8, **caractérisé par le fait que** pour l'amortissement de la fréquence de commutation du dispositif de dosage, un clapet anti retour d'étranglement (13) est connecté en série avec l'interrupteur de pression (7)

10. Dispositif selon l'une des revendication 7 à 9, **caractérisé par le fait que** la commande du cylindre pneumatique (9) s'opère par l'intermédiaire d'une électrovanne (11) et d'une source d'air comprimé (10).

11. Dispositif selon la revendication 10 , **caractérisé par le fait que** le signal de commande pour la commande d'une source de tension (12) et l'interrupteur de pression (7) peut être généré.

12. Dispositif selon l'une des revendications 7 à 11, **caractérisé par le fait que** pour la mesure de l'aspiration, un capteur de dépression est prévu en amont de la pompe.
